# EUROPÄISCHE PATENTSCHRIFT

(11) **EP 3 964 741 B1**
(45) Veröffentlichungstag und Bekanntmachung des Hinweises auf die Patenterteilung: **01.11.2023**
(21) Anmeldenummer: 21192142.4
(22) Anmeldetag: 19.08.2021
(51) Int. Cl.: F16K 31/06, F16K 1/36, F16K 25/00, B60T 8/36, H01F 7/08, H01F 7/14, F16K 1/20, F16K 47/00

(54) **PLATTENANKER-DÄMPFUNGSEINRICHTUNG FÜR EIN KIPPANKERVENTIL, PLATTENANKER SOWIE KIPPANKERVENTIL MIT EINER PLATTENANKER-DÄMPFUNGSEINRICHTUNG**
PLATE ANCHOR DAMPING DEVICE FOR TILTING ANCHOR VALVE, PLATE ANCHOR, AND TILTING ANCHOR VALVE WITH A PLATE ANCHOR DAMPING DEVICE
DISPOSITIF D'AMORTISSEMENT D'ANCRAGE À PLAQUES POUR UNE SOUPAPE À ARMATURE BASCULANTE, ANCRAGE DE PLAQUE, AINSI QUE SOUPAPE À ARMATURE BASCULANTE DOTÉE D'UN DISPOSITIF D'AMORTISSEMENT D'ANCRAGE À PLAQUES

(30) Priorität: 07.09.2020 DE 102020123249
(43) Veröffentlichungstag der Anmeldung: 09.03.2022
(73) Patentinhaber: KNORR-BREMSE Systeme für Nutzfahrzeuge GmbH, 80809 München (DE)
(72) Erfinder: DEEG, Markus, 71735 Eberdingen (DE); WÖRNER, Ralf, 75233 Tiefenbronn (DE); SÖHNLEIN, Julian, 71701 Schwieberdingen (DE); RÖTHER, Friedbert, 74389 Cleebronn (DE)

(56) Entgegenhaltungen:
- DE-A1-102014 210 658
- DE-B3-102014 115 206
- JP-A- S6 455 809
- US-A- 3 472 523
- US-A1- 2002 134 957
- US-A1- 2007 239 042
- US-A1- 2008 073 605
- US-A1- 2009 014 963
- US-A1- 2012 228 533
- US-A1- 2018 180 195
- US-A1- 2020 023 729
- US-A1- 2020 025 292

## Beschreibung

Die vorliegende Erfindung betrifft einen Plattenanker für ein Kippankerventil sowie ein Kippankerventil mit einem solchen Plattenanker.

Kippankerventile finden beispielsweise Verwendung als Steuerventil zur Druckregelung, etwa in einem Fahrzeug, wie beispielsweise in einem Nutzfahrzeug oder Bus zur Personenbeförderung. Beispielsweise umfasst ein Bremssystem für ein Fahrzeug mit einem elektronischen Betriebsbremssystem zumindest ein Steuerventil zur Druckregelung.

Ein Kippankerventil ist zum Beispiel aus DE 10 2014 115 206 B3 bekannt, welches die Aufgabe hat, ein verbessertes Steuerventil für ein Druckregelmodul eines Fahrzeugs zu schaffen. Das Kippankerventil umfasst insbesondere ein Spulenelement mit mindestens einen Spulenkern und eine radial um den Spulenkern angeordnete Spule, einen Anker (sogenannter Kippanker), der an einer Stirnseite des Ankers mittels eines Lagers gelagert ist, wobei der Anker durch ein Aktivieren der Spule von einer ersten Position in eine zweite Position bewegbar ist, und eine Feder zum Bewegen des Ankers, die eine Kraft auf den Anker ausübt, um den Anker in Richtung der ersten Position zu bewegen. Ein Dichtelement ist an der dem Spulenelement abgewandten Seite des Ankers angeordnet ist. In einer Halbschale ist ein Ventilsitz mit einem Ausgang und einem Eingang für ein Fluid ausgebildet, wobei der Ausgang in der ersten Position des Ankers mittels des Dichtelements fluiddicht verschließbar ist.

Das Kippankerventil kann ein Dämpferelement aufweisen, das an der dem Spulenelement zugewandten Seite des Ankers angeordnet ist. Dabei kann das Dämpferelement ausgebildet sein, bei einer Bewegung des Ankers in die zweite Position eine mechanische Schwingung des Ankers, insbesondere eine Vibration und/oder eine Erschütterung und/oder einen Stoß, zu dämpfen. Das Dämpferelement kann mittig an dem Anker angeordnet sein. So kann das Dämpferelement auf den Spulenkern wirken. Das Dämpferelement kann derart am Anker angeordnet sein, dass es bei einer Bewegung des Ankers in die zweite Position auf die Spule, eine Stirnseite der Spule oder eine an einer Stirnseite der Spule angeordnete Lochscheibe wirkt. So kann das Dämpferelement an einem dem Lager abgewandten Ende auf einer der Spule zugewandten Hauptfläche des Ankers angeordnet sein.

Durch das Kippankerprinzip mit einer seitlichen Ankerlagerung kann die bewegte Masse des Kippankerventils sehr gering gehalten werden. Ferner kann ein weitgehend homogen verteiltes Magnetfeld mittels der Spule erzeugt werden, die über den Spulenkern auf den Anker wirkt. Die Feder erzeugt dabei eine Gegenkraft beziehungsweise eine Ventilschließkraft.

Es sind darüber hinaus weitere Bauarten von derartigen Magnetventilen bekannt, wie beispielsweise in DE 10 2014 115 207 A1, DE 10 2018 123 997 A1, oder DE 10 2016 105 532 A1 beschrieben.

Derartige Kippankerventile bzw. Plattenanker in Kippankerausführung können das Problem aufweisen, dass die Kraft aufgrund der Winkelbewegung des Plattenankers oder Kippankers an verschiedenen Bereichen vom Dämpferelement eingebracht wird. Es gibt Bereiche, an denen der Anker am Gegenelement aufgrund der Winkelbewegung zu verschiedenen Zeitpunkten aufschlägt. So ist eine konstante Dämpfung durch das Dämpferelement nur schwer zu erreichen. Eine eingeschränkte Dämpfung kann zu Beeinträchtigungen im Betrieb führen, etwa wenn ein schwach oder ungedämpftes Aufschlagen des Plattenankers beim Lösen der Bremse vom Fahrgast eines Busses oder von Passanten aufgrund des harten und lauten Körperschalls als störend empfunden wird.

Weitere Magnetventilanordnungen mit durch ein Magnetfeld bewegbaren Ankern und Dämpfungselementen sind in US 2002/134957 A1, US 2007/239042 A1, US 2012/228533 A1, US 2018/180195 A1, DE 10 2014 210658 A1, US 2020/023729 A1, JP S64 55809 A, und US 2008/073605 A1 beschrieben. Darüber hinaus sind aus US 2020/025292 A1, US 3 472 523 A und US 2009/014963 A1 O-Ring-förmige Dichtungselemente bekannt.

Der vorliegenden Erfindung liegt die Aufgabe zugrunde, einen Plattenanker für ein Kippankerventil sowie ein Kippankerventil mit einem solchen Plattenanker anzugeben, die es erlauben, das Dämpfungsverhalten und damit eine störende Geräuschentwicklung an dem Kippankerventil zu verbessern.

Die Erfindung betrifft einen Plattenanker für ein Kippankerventil sowie ein Kippankerventil mit einem solchen Plattenanker gemäß den beigefügten Patentansprüchen. Vorteilhafte Aus- und Weiterbildungen der Erfindung sind in den Unteransprüchen und der nachfolgenden Beschreibung angegeben.

Ein Aspekt der Erfindung betrifft einen Plattenanker für ein Kippankerventil, aufweisend einen Ankerkörper, der an einer Stirnseite des Ankerkörpers mittels eines Lagers an dem Kippankerventil lagerbar ist und durch Aktivieren eines elektrischen Spulenelements von einer ersten Position in eine zweite Position bewegbar ist, und eine Plattenanker-Dämpfungseinrichtung, die an einer Oberfläche des Ankerkörpers angebracht ist derart, dass der wenigstens eine Dämpfungskörper bei einer Anschlagbewegung des Plattenankers von der ersten Position in die zweite Position beim Anschlag an dem Gegenelement elastisch verformt wird.

Darüber hinaus betrifft die Erfindung ein Kippankerventil mit einem derartigen Plattenanker. Bevorzugt ist das Kippankerventil als Kippankerventil für ein Druckregelmodul eines Fahrzeugs ausgebildet.

Mit der Erfindung kann somit ein Dämpfungsverhalten und damit eine störende Geräuschentwicklung an dem Kippankerventil verbessert werden, da durch den mit der Anschlagbewegung zunehmend dämpfenden mindestens einen Dämpfungskörper der Plattenanker-Dämpfungseinrichtung der Anschlag am Gegenelement wirksam abgefedert und gedämpft werden kann. In der Anschlagbewegung wird durch die Auswölbungen der geometrischen Kontur, an der der Plattenanker zuerst mit dem Gegenelement in Berührung kommt, über die Zeit immer mehr Volumen des Dämpfungsmaterials für die Dämpfungswirkung involviert und wirksam, so dass der Plattenanker gezielt in seiner Anschlagbewegung abgebremst werden kann. Dabei ist vorteilhaft, dass zunächst eine kleinere Fläche bzw. ein kleineres Volumen für die Dämpfung wirksam wird, die bzw. das sich während der Aufschlagbewegung vergrößert.

Eine solche geometrische Kontur ist bei dem Plattenanker in Kippankerausführung vorteilhaft, da die Kontur auch bei einem nicht parallelen Aufbau des Plattenankers zum Gegenelement, mithin für die Winkelbewegung des Kippankers geeignet ist. Bei einer Ausführung des wenigstens einen Dämpfungskörpers mit Gummi als Dämpfungsmaterial kommt aufgrund der Dämpfungskontur zuerst eine kleinere Gummifläche zur Anlage am Gegenelement, womit eine bessere Dämpfung möglich ist. Gemäß einer Ausführungsform ist eine Dämpfung sogar in mehreren Stufen möglich.

Gemäß einer Ausführungsform wird anfangs nur leicht gedämpft, beispielsweise mit der ersten Auswölbung mit einer Anordnung und Funktionsweise, wie oben beschrieben. Darüber hinaus ist die zweite Auswölbung vorgesehen, die ebenfalls an der dem Gegenelement zugewandten Oberfläche des wenigstens einen Dämpfungskörpers neben der ersten Auswölbung angeordnet und derart gestaltet ist, dass während der Anschlagbewegung des Plattenankers zunächst ein erster Teil des Dämpfungsmaterials an der zweiten Auswölbung elastisch verformt wird und im weiteren Verlauf der Anschlagbewegung ein gegenüber dem ersten Teil größerer zweiter Teil des Dämpfungsmaterials elastisch verformt wird. Mit einer solchen Doppelstruktur lässt sich die für die Dämpfung wirksame Fläche vergrößern, wobei aber gleichzeitig das vorteilhafte Dämpfungsverhalten insgesamt im wesentlichen beibehalten wird, dass zunächst eine kleinere Fläche für die Dämpfung wirksam wird, die sich während der Aufschlagbewegung vergrößert.

Die Auswölbungen sind linienartig entlang der Oberfläche des wenigstens einen Dämpfungskörpers angeordnet. Sie haben eine gebogene, insbesondere kreisrunde, linienartige Erstreckung entlang der Oberfläche des wenigstens einen Dämpfungskörpers. Eine solche Form ist insbesondere bei einem runden Plattenanker von Vorteil, wie er beispielsweise in einem Kippankerventil mit einem zylindrischen Aufbau eingesetzt wird. Beispielsweise kann der wenigstens eine Dämpfungskörper einen, zwei oder mehrere Dämpfungskörper aufweisen, die entlang des Umfangs des Plattenankers nebeneinander angeordnet sind.

Gemäß einer Ausführungsform ist vorgesehen, dass sich mindestens eine der Auswölbungen in Normalrichtung des Plattenankers derart auswölbt, dass sich entlang der linienartigen Erstreckung die Höhe der Auswölbung verändert. Auf diese Art kann vorteilhaft zunächst eine kleinere Fläche für die Dämpfung wirksam werden, die sich während der Aufschlagbewegung in zwei Komponenten vergrößert, nämlich einmal entlang des linienartigen Verlaufs der Auswölbung (beispielsweise entlang des Kreisumfangs des Plattenankers) und zum anderen in Normalrichtung des Plattenankers.

Gemäß einer Ausführungsform mit zwei oder mehr Auswölbungen kann vorgesehen sein, dass sich die erste Auswölbung in Normalrichtung des Plattenankers mit einer ersten Höhe auswölbt und die zweite Auswölbung sich in Normalrichtung des Plattenankers mit einer zweiten Höhe, die geringer ist als die erste Höhe. Auch hier wird vorteilhaft erreicht, dass zunächst eine kleinere Fläche für die Dämpfung wirksam wird, die sich während der Aufschlagbewegung in zwei Komponenten vergrößert, nämlich einmal ausgehend von der ersten Auswölbung zur zweiten Auswölbung (beispielsweise von außen nach innen des Plattenankers) und zum anderen in Normalrichtung des Plattenankers.

Gemäß einer vorteilhaften Ausführungsform können diese auch kombiniert werden, so dass sich während der Aufschlagbewegung die Fläche des Dämpfungsmaterials in drei Komponenten vergrößert.

In einer Ausführungsform ist vorgesehen, dass die Plattenanker-Dämpfungseinrichtung weiterhin einen Dichtungskörper aufweist, der mit dem wenigstens einen Dämpfungskörper verbunden ist, wobei der Dichtungskörper ausgebildet ist, eine Ventilöffnung fluiddicht zu verschließen. Vorzugsweise sind der Dichtungskörper und der wenigstens eine Dämpfungskörper einstückig ausgebildet. Damit sind die beiden Materialien - Dämpfungskörper einerseits und Dichtungskörper andererseits - miteinander verbunden. Somit können sowohl Dämpfungskörper als auch Dichtungskörper kostengünstig hergestellt werden, da bei Verwendung von Gummi als Dämpfungs- bzw. Dichtungsmaterial nur ein Vulkanisationsschritt notwendig ist.

Gemäß einer Ausführungsform ist zudem ein Haltekörper vorgesehen, der ausgebildet ist, in dem Plattenanker verankert zu werden. Der wenigstens eine Dämpfungskörper und der Dichtungskörper sind mit dem Haltekörper, vorzugsweise einstückig, verbunden und derart ausgebildet, dass sie bei Befestigung des Haltekörpers im Plattenanker an gegenüberliegenden Oberflächen des Plattenankers anliegen.

Gemäß einer Ausführungsform sind der Dichtungskörper und der wenigstens eine Dämpfungskörper in Normalrichtung des Plattenankers gesehen zueinander versetzt angeordnet. Mithin sind Ventilsitzseite und Dämpfungskörper zueinander versetzt, womit die auf Dämpfungskörper und Dichtungskörper wechselseitig einwirkenden Kräfte in Normalrichtung zueinander versetzt sind und eine Wechselwirkung im Dämpfungs-und Dichtungsmaterial in Form von hin und her wechselnden Belastungen auf der Dämpfungsseite einerseits und der Ventilseite andererseits aufgrund der Versetzung verringert oder deutlich vermindert ist.

Gemäß einer vorteilhaften Ausführungsform ist vorgesehen, dass der wenigstens eine Dämpfungskörper einen ersten Dämpfungskörper und einen zweiten Dämpfungskörper aufweist, die in Normalrichtung des Plattenankers gesehen jeweils versetzt zum Dichtungskörper angeordnet sind. Beispielsweise sind der erste Dämpfungskörper und der zweite Dämpfungskörper versetzt an gegenüberliegenden Seiten des Dichtungskörpers angeordnet. Der Dichtungskörper kann zum Beispiel mittig flankiert von den beiden Dämpfungskörpern angeordnet sein. Die Dämpfungskräfte wirken somit nicht auf den Dichtungskörper ein und umgekehrt, da dieser versetzt zu den Dämpfungskörpern angeordnet ist.

Gemäß einer Ausführungsform des Plattenankers ist vorgesehen, dass der Ankerkörper wenigstens eine erste Vertiefung aufweist, in welcher der wenigstens eine Dämpfungskörper wenigstens entlang einer Teilerstreckung des Dämpfungskörpers angebracht ist. Damit ist möglich, dass der Dämpfungskörper wirksam im Ankerkörper gehalten wird, wobei durch die Vertiefung einerseits ein verbessertes Fixieren am Ankerkörper möglich ist und andererseits auch beim Aufschlag auf das Gegenelement auftretende seitliche Kräfte aufgenommen werden können.

In einer Ausführungsform ist vorgesehen, dass der Ankerkörper eine zweite Vertiefung oder Öffnung aufweist, an der der Dichtungskörper an einer dem wenigstens einen Dämpfungskörper gegenüberliegenden Oberfläche des Ankerkörpers angeordnet ist. Mit dem Dichtungskörper wird eine Ventilöffnung des Kippankerventils fluiddicht verschlossen. Hierbei sind die wenigstens eine erste Vertiefung und die zweite Vertiefung oder Öffnung in Normalrichtung des Ankerkörpers gesehen zueinander versetzt. Damit ist möglich, dass der Dämpfungskörper und Dichtungskörper wirksam im Ankerkörper gehalten werden, während andererseits Dämpfungskräfte somit nicht auf den Dichtungskörper einwirken, sondern in der Vertiefung in den Plattenkörper eingeleitet werden und somit entkoppelt vom Dichtungskörper sind. Auch wirken Kräfte von der Ventilöffnungsseite nicht auf die Dämpfungskörper ein, da diese versetzt zu dem Dichtungskörper im Ankerkörper gehalten werden.

Die hierin beschriebenen Ausführungsformen können nebeneinander oder auch in beliebiger Kombination miteinander angewandt werden.

Die Erfindung wird im Folgenden anhand der in der Zeichnung dargestellten Figuren näher erläutert. Es zeigen:
- Fig. 1: eine schematische Querschnittsdarstellung eines beispielhaften Kippankerventils gemäß einem Ausführungsbeispiel der vorliegenden Erfindung,
- Fig. 2: eine schematische Querschnittsdarstellung eines bestromten Kippankerventils mit eingezeichnetem Magnetfluss gemäß einem Ausführungsbeispiel der vorliegenden Erfindung,
- Fig. 3A-D: jeweilige schematische Darstellungen eines Plattenankers mit einer Plattenanker-Dämpfungseinrichtung gemäß einer Ausführungsform der vorliegenden Erfindung,
- Fig. 4A-C: jeweilige schematische Darstellungen eines Plattenankers gemäß einer Ausführungsform der vorliegenden Erfindung dargestellt ohne Plattenanker-Dämpfungseinrichtung.

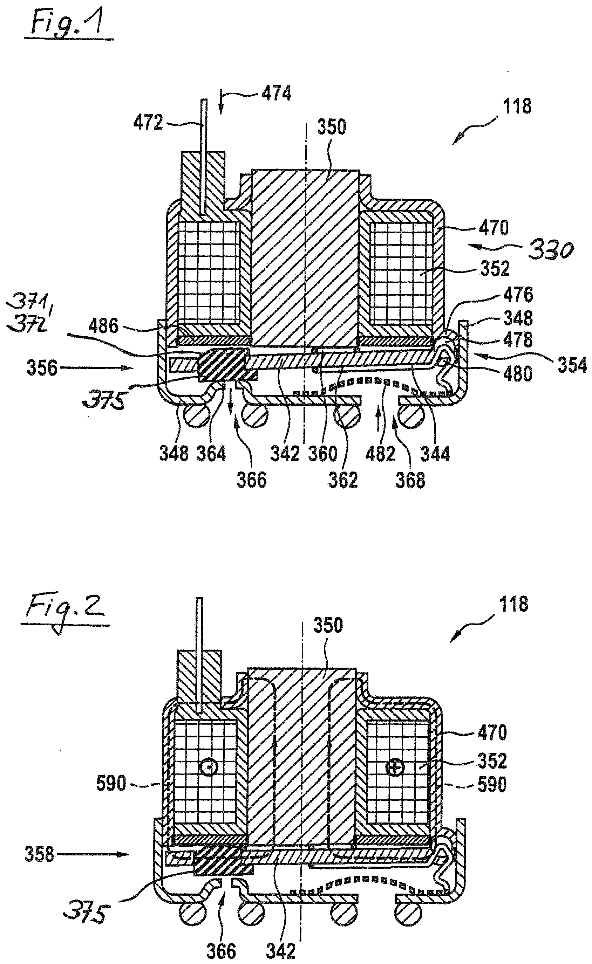

**Fig. 1** zeigt eine vereinfachte Querschnittsdarstellung eines Kippankerventils 118 gemäß einem Ausführungsbeispiel der vorliegenden Erfindung. Bei dem Kippankerventil 118 kann es sich dem Grundprinzip nach um ein Ausführungsbeispiel eines in DE 10 2014 115 206 B3 gezeigten Kippankerventils 118 handeln. Dabei kann es sich in einer Variante um ein in der dortigen Fig. 1 mit dem Bezugszeichen 112 versehenes Einlass-Magnetventil handeln.

Die in **Fig. 1** gezeigte Ausführungsform eines Kippankerventil 118 weist ein mit der Halbschale 348 und einer weiteren Halbschale 470 gebildetes Gehäuse auf. Dabei sind in einem Ausführungsbeispiel die Halbschale 348 und die weitere Halbschale 470 mittels Laserschweißen miteinander fluiddicht verbunden. In der weiteren Halbschale 470 ist ein Spulenelement 330 angeordnet. Das Spulenelement 330 umfasst einen Spulenkern 350 sowie eine ringförmig um den Spulenkern angeordnete Spule 352. Die weitere Halbschale 470 wird durch das Spulenelement 330 fast vollständig ausgefüllt. Das Spulenelement 330 weist einen Anschluss 472 zum Empfangen eines Steuersignals 474 auf. Je nach Status des Steuersignals 474 wird die Spule 352 stromlos oder bestromt geschaltet. In der weiteren Halbschale 470 ist an einer Seite eine erste Lagerhalbschale 476 für eine Nadelrolle 478 ausgebildet. An einer Stirnseite des Spulenelements 330 beziehungsweise der Spule 352 ist angrenzend an die erste Lagerhalbschale 476 ein Plattenanker 342 angeordnet, im folgenden auch kurz als Anker bezeichnet. In dem Anker 342 ist eine zweite Lagerhalbschale 480 ausgebildet. Die erste Lagerhalbschale 476, die Nadelrolle 478 sowie die zweite Lagerhalbschale 480 bilden zusammen ein Lager 354. Das Lager 354 ist nur beispielhaft. Der Anker 342 kann, wie im folgenden noch näher erläutert, auch durch eine andere Lageranordnung gelagert sein.

An dem Anker 342 ist eine Feder 344 angeordnet. Ein erster Teilbereich 360 der Feder 344 ist auf der dem Spulenelement 330 zugewandten Seite des Ankers 342 angeordnet. Ein zweiter Teilbereich 362 der Feder 344 ist auf der dem Spulenelement 330 abgewandten Seite des Ankers 342 angeordnet. In dem hier dargestellten Ausführungsbeispiel handelt es sich bei der Feder 344 um ein Drahtbiegeelement. In der Halbschale 348 ist ein Eingang 368 und in einer Ventilöffnung (sogenannter Ventilsitz) 364 ein Ausgang 366 ausgebildet. Dabei ist an dem Eingang 368 ein Feinsieb 482 angeordnet. Beispielsweise ist das Feinsieb 482 mit der Halbschale 348 über ein Verfahren unter Verwendung einer Widerstandsschweißung miteinander verbunden.

An dem Anker 342 ist ein Dichtungskörper 375 sowie wenigstens ein Dämpfungskörper 371, 372 angeordnet, wie im weiteren Verlauf noch näher erläutert. Der Dichtungskörper 375 ist auf der dem Spulenelement 330 abgewandten Seite des Ankers 342 angeordnet. Ferner ist der oder die Dämpfungskörper 371, 372 auf der dem Spulenelement 330 zugewandten Seite des Ankers 342 angeordnet. Dabei sind in dem dargestellten Ausführungsbeispiel der Dichtungskörper 375 sowie der oder die Dämpfungskörper 371, 372 einstückig ausgeformt. Diese können jedoch auch voneinander getrennt ausgeformt und am Anker 342 befestigt sein. Sowohl der Dichtungskörper 375 als auch der oder die Dämpfungskörper 371, 372 sind in einem Ausführungsbeispiel aus einem Elastomer, wie beispielsweise Gummi, gefertigt.

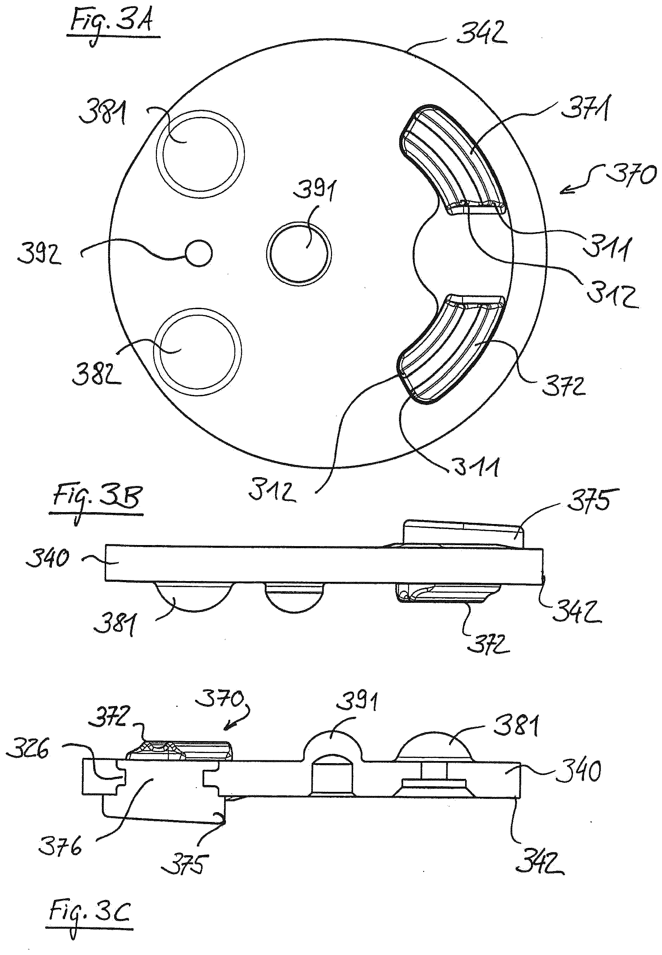

Der Anker 342 ist in einer ersten Position 356 dargestellt. In der ersten Position 356 ist der Dichtungskörper 375 derart zum Ventilsitz 364 angeordnet, dass dieser fluiddicht verschlossen ist. Eine Oberfläche des Ventilsitzes 364, an der der Dichtungskörper 375 anliegt, wenn der Anker 342 in der ersten Position 356 angeordnet ist, weist z.B. einen Winkel von 2° zur Haupterstreckungsebene der Halbschale 348 auf. Es kann auch vorteilhaft vorgesehen sein, wenn die Ventilsitz-seitige Oberfläche des Dichtungskörpers 375 schräg geformt ist (wie in **Fig. 3B** angedeutet), damit er planparallel zum Ventilsitz ist. Damit kann ein schräger Aufschlagwinkel am Ventilsitz kompensiert werden, um Dichtheit auch schon initial zu haben.

In dem in **Fig. 1** dargestellten Ausführungsbeispiel ist an der Stirnseite des Spulenelements 330 eine Lochscheibe 486 angeordnet. Dabei weist die Lochscheibe 486 einen Durchbruch im Durchmesser des Spulenkerns 350 auf. Die Lochscheibe 486 ist mit der weiteren Halbschale 470 so wie mit dem Spulenkern 350 verbunden. Dabei ist in einem günstigen Ausführungsbeispiel die Lochscheibe 486 derart mit der weiteren Halbschale 470 und dem Spulenkern 350 verbunden, dass die Spule 352 fluiddicht von einem von der Halbschale 348 geschaffenen Raum, in dem der Anker 342 angeordnet ist, getrennt ist. Die Lochscheibe 486 besteht aus einem magnetisch nicht leitenden Material. Auch die Halbschale 348 besteht vorzugsweise aus einem magnetisch nicht leitenden Material.

Das in **Fig. 1** gezeigte Kippankerventil 118 lehnt sich an ein Grundprinzip eines elektrischen Relais an. Mit Ausnahme der Spule 352 sind in einem Ausführungsbeispiel die Elemente des Kippankerventils 118 aus Stahl gefertigt. Vorteilhaft sind diese dadurch hochtemperaturfest und weisen eine hohe Oberflächengüte auf. Als Ankerlagerung dient eine Nadelrolle 478 ähnlich, wie diese in klassischen Nadellagern Verwendung findet. Die in einem Ausführungsbeispiel aus einem Formbiegedraht gefertigte Feder 344 fixiert sowohl den Anker 342 als auch erzeugt die Feder 344 eine Ventilschließkraft des Kippankerventils 118. Sowohl das aus der Halbschale 348 und der weiteren Halbschale 470 gebildete Gehäuse als auch der Anker 342 sind Stanzbeziehungsweise Tiefziehbleche. Vorteilhaft sind die Einzelteile des Kippankerventils 118 per Laser Schweißung in Verbindung.

Durch eine Anordnung einer runden Spule 330 in einer weitgehend runden weiteren Halbschale 470 erfolgt eine Magnetkreisoptimierung durch ein weitgehend homogen verteiltes Magnetfeld. So folgt die Anordnung der Spule 330 in der weiteren Halbschale 470 zusammen mit dem Anker 342 einem Topf-Deckel-Prinzip und führt zu einer Spulen- und Kostenminimierung. Neben dem in **Fig. 1** dargestellten Grundprinzip des Kippankerventils 118 als ein Schließer beziehungsweise ein Ein-/Auslassventil ist, wie in DE 10 2014 115 206 B3 gezeigt, auch eine Konfiguration des Kippankerventils 118 als Öffner beispielsweise für eine Backupanwendung oder als ein Wechsler für einen universellen Einsatz einfach realisierbar.

Das hier dargestellte Kippankerventil 118 schafft eine preisgünstige Gesamtlösung durch eine optimale Magnetkraft-Ausnutzung bei einer minimalen Spulen- und Gehäusegröße. Das robuste Grundkonzept zeichnet sich durch eine hohe Schüttelfestigkeit durch die Halbschalenlagerung sowie die möglichen hohen Schaltzahlen aus. Die hohen Schaltzahlen werden beispielsweise durch die große Lager-Berührfläche bei einem geringen zurückzulegenden Weg des Ankers 342 geschaffen.

**Fig. 2** zeigt eine schematische Querschnittsdarstellung eines bestromten Kippankerventils 118 mit eingezeichnetem Magnetfluss 590 gemäß einem Ausführungsbeispiel der vorliegenden Erfindung. Die Darstellung des Kippankerventils 118 in **Fig. 2** entspricht der Darstellung des Kippankerventils 118 in **Fig. 1****,** mit dem Unterschied, dass der Anker 342 in der zweiten Position 358 positioniert ist, da die Spule 352 in einem bestromten Zustand ist. Eine gestrichelte Linie zeigt den Magnetfluss 590 rund um die Spule 352. Der Magnetfluss 590 wird im Wesentlichen über den Spulenkern 350 sowie die weitere Halbschale 470 geleitet. Dabei wirkt eine Magnetkraft auf den Anker 342 und bewegt diesen in die zweite Position 358 oder alternativ hält die Magnetkraft den Anker 342 in der zweiten Position 358. Der Spulenkern 350, die weitere Gehäuseschale 470 und der Anker 342 weisen ein magnetisch leitendes Material auf. Wenn der Anker 342 in der zweiten Position 358 positioniert ist, so ist der Ausgang 366 freigegeben und das Kippankerventil 118 auf Durchgang beziehungsweise Durchfluss geschaltet.

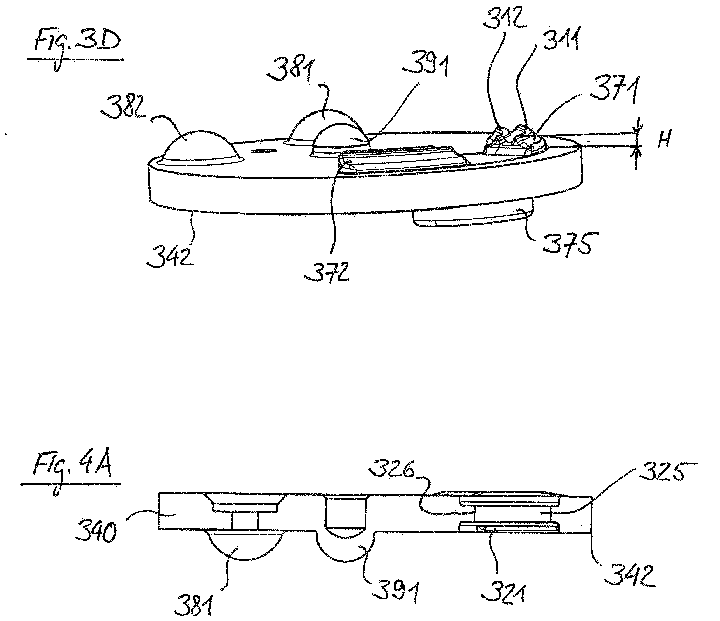

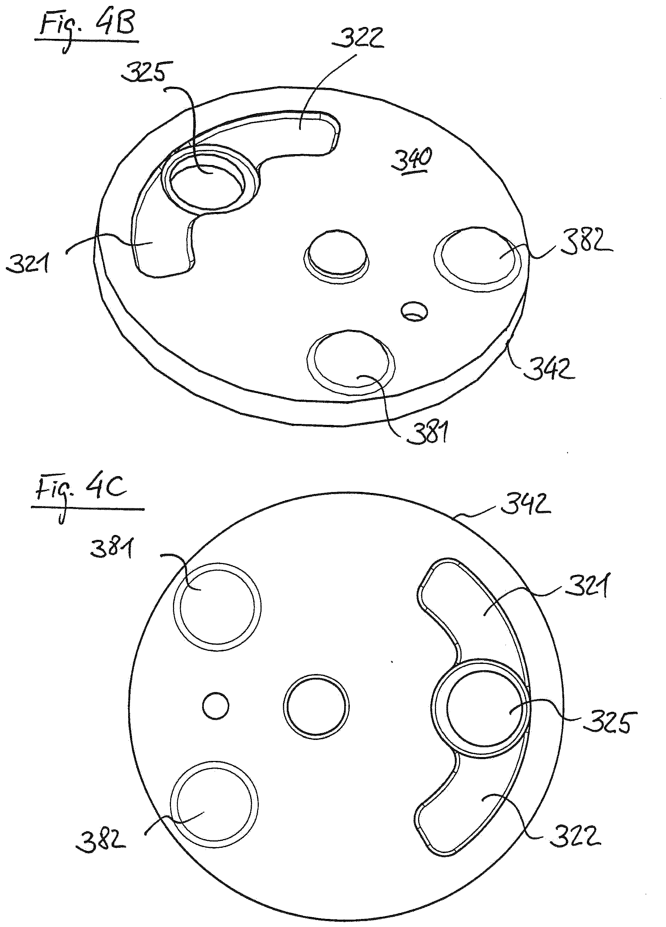

**Fig. 3A-D** zeigen jeweilige schematische Darstellungen eines Plattenankers mit einer Plattenanker-Dämpfungseinrichtung gemäß einer Ausführungsform der vorliegenden Erfindung, während **Fig. 4A-C** jeweilige schematische Darstellungen eines Plattenankers ohne Plattenanker-Dämpfungseinrichtung, also nur den Ankerkörper an sich, gemäß einer Ausführungsform der vorliegenden Erfindung zeigen. Die **Fig. 3A****,** **4C** zeigen den Plattenanker mit bzw. ohne die Plattenanker-Dämpfungseinrichtung in einer Draufsicht, die **Fig. 3D****,** **4B** in einer jeweiligen Perspektivansicht und die **Fig. 3C****,** **4A** in einer jeweiligen Querschnittsansicht. **Fig. 3B** zeigt den Plattenanker in einer Seitenansicht.

Der Plattenanker 342, wie er dem Grunde nach in einem Kippankerventil 118 gemäß **Fig. 1 und 2** Verwendung finden kann, weist einen Ankerkörper 340, bevorzugt aus magnetischem Material, auf, der an einer Stirnseite des Ankerkörpers 340 mittels eines Lagers an dem Kippankerventil 118 lagerbar ist und durch Aktivieren des elektrischen Spulenelements 330 von der ersten Position 356 in die zweite Position 358 bewegbar ist. Die in **Fig. 1, 2** dargestellte Lagerung ist nur beispielhaft. Im folgenden wird eine weitere Möglichkeit der Lagerung eines Plattenankers 342 gemäß der Ausführungsform der **Fig. 3** **und** **4** beschrieben, wie sie insbesondere auch in DE 10 2016 105 532 A1 gezeigt ist.

Der Anker 342 weist mindestens eine, in dieser Ausführungsform zwei, zumindest teilweise runde Erhebungen 381, 382 in einem Lagerabschnitt auf, wobei die Erhebungen 381, 382 günstigerweise in eine jeweilige Ausnehmung oder Öffnung eingreift (vgl. Fig. 1A der DE 10 2016 105 532 A1: Erhebung 160 und Ausnehmung 165), die in einem den Erhebungen 381, 382 gegenüberliegenden Abschnitt eines Gehäuses des Kippankerventils 118 angeordnet sind. Hierdurch kann der Anker 342 in der Ausnehmung bei einer Bewegung von der ersten Position 356 in die zweite Position 358 nach einem Einschalten eines Stromflusses durch die Spule 330 gleiten und wird zugleich an einer fixen Position in dem Gehäuse gehalten. Die Erhebungen 381, 382 können in dem dargestellten Ausführungsbeispiel als jeweilige Kugel ausgeformt sind, die in dem Lagerabschnitt in das Material des Ankerkörpers 340 eingepresst oder eingeklebt sind. Denkbar ist auch, dass die Kugeln mit dem Material des Ankerkörpers 340 verschweißt sind. Die jeweilige Kugel kann aus einem Metall, beispielsweise aus Stahl, gefertigt sein und/oder ein anderes Material als der Anker 342 aufweisen. Hierzu kann das Material der Kugel nach einem Kriterium des möglichst geringen Verschleißes ausgewählt werden, wogegen das Material des Ankers 342 nach einem Kriterium des optimalen bzw. höchsten magnetischen Flusses ausgewählt werden kann. Denkbar ist jedoch auch, dass statt einer Kugel die Erhebungen 381, 382 lediglich durch eine einseitige Prägung in dem Material des Ankerkörpers 340 ausgebildet sind. Hierdurch kann ein separates Einbetten einer jeweiligen Kugel in das Material des Ankers 342 entfallen und dennoch eine zumindest teilweise runde Erhebung über eine Oberfläche des Ankerkörpers 340 hinaus gebildet werden, die die gleichen Funktionen erfüllt, wie eine Kugel.

Eine Feder (nicht dargestellt; vgl. Feder 120 gemäß Fig. 1 der DE 10 2016 105 532 A1) kann zum spielfreien Andrücken der beispielsweise im Ankerkörper 340 eingepressten Lagerkugel(n) in die (beispielsweise trapezförmige) Gegenschale bzw. Ausnehmung im Gehäuse dienen. Der Anker 342 kann durch die Feder fixiert werden, sodass der Anker 342 durch die Feder in einer vorbestimmten Position gehalten wird. Dies bietet den Vorteil, dass eine konstante Vorspannkraft auf den Anker 342 ausgeübt werden kann, und die von der Feder auf den Anker 342 ausgeübte Kraft möglichst nahe an einem an der Drehachse liegenden Kraftangriffspunkt auf den Anker 342 eingeleitet werden kann. Auch kann eine Erhebung 391 und/oder eine Öffnung 392 zum besseren Angriff einer Feder am Ankerkörper 340 vorgesehen sein. Alternativ kann auch der Anker 342 an dem Spulenelement 330 eingehängt werden. In diesem Fall könnte dann die Feder, die beispielsweise als Blattfeder ausgestaltet ist, entfallen.

Die **Fig. 3A-3D** zeigen neben dem Ankerkörper 340, der wie beschrieben ausgestaltet sein kann, eine Plattenanker-Dämpfungseinrichtung 370 gemäß einem Ausführungsbeispiel der vorliegenden Erfindung, die an einer Oberfläche des Ankerkörpers 340 angebracht ist.

Hierzu weist der Ankerkörper 340 bevorzugt wenigstens eine Vertiefung auf, in die ein Dämpfungskörper teilweise eingebracht und befestigt werden kann. In der vorliegenden Ausführungsform weist die Dämpfungseinrichtung 370 bevorzugt zwei Dämpfungskörper 371, 372 auf, wie im folgenden noch näher erläutert. Diese sind entsprechend in einer ersten Vertiefung 321 und einer zweiten Vertiefung 322 im Ankerkörper 340 vorgesehen **(****Fig. 4A-4C****),** in denen jeweils ein Dämpfungskörper 371 bzw. 372 wenigstens entlang einer Teilerstreckung des jeweiligen Dämpfungskörpers angebracht ist, beispielsweise durch Verkleben.

Neben den Dämpfungskörpern 371, 372 weist die Dämpfungseinrichtung 370 weiterhin einen Dichtungskörper 375 an der den Dämpfungskörpern gegenüberliegenden Oberfläche des Ankerkörpers 340 auf, der eine fluiddichte Abdichtungsfunktion des Ventilsitzes 364 hat, wie in Bezug auf **Fig. 1** beschrieben. Bevorzugt sind der oder die Dämpfungskörper 371, 372 mit dem Dichtungskörper 375 einstückig verbunden, wie in der Querschnittsdarstellung der **Fig. 3C** gezeigt. Diese Verbindung wird durch einen mit ausgeformten Haltekörper 376 realisiert, der an einer Schulter 326 des Ankerkörpers 340 befestigt ist und somit eine gewisse wechselseitige Entkopplung zwischen Dämpfungskörper 371, 372 und Dichtungskörper 375 bewerkstelligt. Der Haltekörper 376 ist in dem Ankerkörper 340 verankert, und die Dämpfungskörper 371, 372 und der Dichtungskörper 375 sind über den Haltekörper 376 miteinander verbunden, so dass sie bei Befestigung des Haltekörpers 376 im Ankerkörper 340 an gegenüberliegenden Oberflächen des Ankerkörpers 340 anliegen.

Dazu weist der Ankerkörper 340 eine weitere Vertiefung oder Öffnung 325 auf **(****Fig. 4A-****C),** an der der Dichtungskörper 375 an der den Dämpfungskörpern 371, 372 gegenüberliegenden Oberfläche des Ankerkörpers 340 angeordnet ist **(****Fig. 3B**, **3D**). Vorteilhaft sind die Vertiefungen 321, 322 und die Vertiefung oder Öffnung 325 in Normalrichtung des Ankerkörpers 340 gesehen zueinander versetzt, wie in **Fig. 4B, 4C** dargestellt. Damit sind auch der Dichtungskörper 375 und die Dämpfungskörper 371, 372 in Normalrichtung des Ankers 342 zueinander versetzt angeordnet. Die Normalrichtung ist die Richtung der Draufsicht auf den Ankerkörper 340 bzw. die Richtung senkrecht zur Oberfläche des Ankerkörpers 340. Damit sind auch die auf Dämpfungskörper 371, 372 und Dichtungskörper 375 wechselseitig einwirkenden Kräfte in Normalrichtung zueinander versetzt und eine Wechselwirkung im Dämpfungs- und Dichtungsmaterial in Form von hin und her wechselnden Belastungen auf der Dämpfungsseite einerseits und der Ventilseite andererseits aufgrund der Versetzung verringert oder deutlich vermindert. Insbesondere werden Kräfte, die auf die Dämpfungskörper 371, 372 einwirken, von den Vertiefungen 321 und 322 aufgenommen und vom Dichtungskörper ferngehalten, während umgekehrt auf den Dichtungskörper 375 von der Ventilsitzseite einwirkende Kräfte in Normalrichtung des Ankerkörpers 340 weitgehend von der Schulter 326 aufgenommen und durch die versetzte Öffnung 325 von den Dämpfungskörpern 371, 372 ferngehalten werden.

Mit Bezug auf **Fig. 3A-3D** wird nun eine Ausführungsform einer erfindungsgemäßen Plattenanker-Dämpfungseinrichtung 370, welche in dem Kippankerventil gemäß **Fig. 1** und **2** eingesetzt werden kann, näher beschrieben. Diese weist wenigstens einen Dämpfungskörper auf, um Stöße des Ankers 342 an einem Gegenelement, hier an der Lochscheibe 486 des Spulenelements 330 abzudämpfen. Als Gegenelement können, je nach Ausführung des Kippankerventils, auch andere Bauteile, etwa eines Gehäuses und/oder des Spulenelements, dienen. Im vorliegenden Ausführungsbeispiel sind, wie oben bereits beschrieben, zwei Dämpfungskörper 371, 372 vorgesehen, die versetzt zum Dichtungskörper 375 angeordnet sind. Insbesondere sind der erste Dämpfungskörper 371 und der zweite Dämpfungskörper 372 in Normalrichtung des Ankers 342 versetzt an gegenüberliegenden Seiten des Dichtungskörpers 375 angeordnet.

Das Dämpfungsmaterial der Dämpfungskörper ist derart beschaffen, dass dieses bei einer Anschlagbewegung des Ankers 342 in Richtung auf die Lochscheibe 486 beim Anschlag an der Lochscheibe elastisch verformt wird, um den Stoß abzufedern. Darüber hinaus weisen die Dämpfungskörper 371, 372 zur Verbesserung des Dämpfungsverhaltens jeweils eine geometrische Kontur auf, die an beiden Dämpfungskörpern im wesentlichen gleich gestaltet ist, aber auch unterschiedlich sein kann. Die geometrische Kontur umfasst mindestens eine Auswölbung an einer dem Gegenelement, mithin der Lochscheibe 486 zugewandten Oberfläche des jeweiligen Dämpfungskörpers 371, 372. Grundsätzlich ist eine Auswölbung für die im folgenden beschriebene Dämpfungsfunktion ausreichend. Im vorliegenden Ausführungsbeispiel wurde jedoch eine bevorzugte Ausführungsform gewählt, bei der eine erste Auswölbung 311 und eine zweite Auswölbung 312 vorgesehen sind, die an der der Lochscheibe 486 zugewandten Oberfläche des jeweiligen Dämpfungskörpers 371, 372 nebeneinander angeordnet sind. Die Auswölbungen sind jeweils derart gestaltet, dass bei der Anschlagbewegung des Ankers 342 das Volumen des jeweiligen Dämpfungskörpers 371, 372, welches zur Dämpfung beiträgt, zunimmt. Insbesondere sind die Auswölbungen derart gestaltet, dass während der Anschlagbewegung des Ankers 342 ausgehend von der ersten Position 356 in die zweite Position 358 beim Anschlag an der Lochscheibe 486 zunächst jeweils ein erster Teil des Dämpfungsmaterials an der ersten bzw. zweiten Auswölbung 311, 312 elastisch verformt wird und im weiteren Verlauf der Anschlagbewegung jeweils ein gegenüber dem ersten Teil größerer zweiter Teil des Dämpfungsmaterials elastisch verformt wird. Mithin wird die jeweilige Auswölbung beim Auftreffen an der Lochscheibe zusammengedrückt, wodurch ein immer größeres Volumen bzw. ein immer größerer Teil des Dämpfungsmaterials in die Anschlagbewegung involviert und zusammengedrückt wird, womit die Dämpfungswirkung über die Anschlagbewegung hinweg erhöht wird. Damit kommt erst eine kleinere Gummifläche zur Anlage am Gegenelement, womit eine bessere Dämpfung sowie eine Dämpfung in mehreren Stufen möglich ist. Zuerst wird nur leicht gedämpft, wobei sich die Dämpfungswirkung mit der Anschlagbewegung sukzessive erhöht.

Eine Auswölbung gemäß der Erfindung ist eine wulstartige Erhebung, Erhöhung oder Verformung am Dämpfungsmaterial, die dazu führt, dass zunächst nur ein Teil des Dämpfungsmaterials, das an der Auswölbung aufgrund des verkürzten Abstandes zuerst mit dem Gegenelement in Berührung kommt, elastisch verformt wird. Die Auswölbung kann im Prinzip eine beliebige Formgebung haben, kann z.B. abgerundet (wie in den Figuren dargestellt) oder auch kantig ausgebildet sein. Sie kann durch entsprechend geformtes Dämpfungsmaterial des Dämpfungskörpers integral durch Ausformung gebildet sein, oder auch am Dämpfungskörper angeformt sein.

Wie weiter in den **Fig. 3A, 3C****,** **3D** dargestellt, sind die Auswölbungen 311, 312 linienartig entlang der Oberfläche des jeweiligen Dämpfungskörpers 371, 372 angeordnet. Da der Anker 342 eine kreisrunde Form hat, angepasst auf die zylindrische Form des Kippankerventils 118, ist insbesondere eine gebogene, bevorzugt kreisrunde linienartige Erstreckung der jeweiligen Auswölbung entlang der Oberfläche des jeweiligen Dämpfungskörpers 371, 372 vorteilhaft.

Über die Ausgestaltung der geometrischen Form der Auswölbung hinaus kann bei einem oder mehreren der Dämpfungskörper vorgesehen sein, dass sich eine oder mehrere der Auswölbungen 311 und/oder 312 in Normalrichtung des Ankers 342 mit einer Höhe (vgl. Höhe H in **Fig. 3D****)** auswölben, die sich entlang der linienartigen Erstreckung verändert. Mit anderen Worten hat der Scheitel der jeweiligen Auswölbung 311 und/oder 312 eine Höhe H gemessen von der Oberfläche des Ankerkörpers 340, die sich entlang der linienartigen Erstreckung verändert. Beispielsweise ist der linienartige Scheitel der Auswölbung 311 und/oder 312 in Relation zur Oberfläche des Ankerkörpers 340 geneigt, so dass z.B. der umfangsmäßig äußere höhere Bereich der Auswölbung früher mit dem Gegenelement 486 in Kontakt kommt als der innere niedrigere Bereich, der an den Dichtungskörper 375 angrenzt. Die Höhe H ist somit in diesem Bereich niedriger als die Höhe H im umfangsmäßig weiter entfernten Bereich der Auswölbung. Auf diese Art kann vorteilhaft zunächst eine kleinere Fläche des jeweiligen Dämpfungskörpers für die Dämpfung wirksam werden, die sich während der Aufschlagbewegung in mehreren Komponenten oder Richtungen vergrößert, nämlich einmal entlang des linienartigen Verlaufs der Auswölbung und zum anderen in Normalrichtung des Ankers.

Darüber hinaus kann es alternativ oder in Kombination damit vorteilhaft sein, wenn sich eine der Auswölbungen, etwa die Auswölbung 311, in Normalrichtung des Ankers 342 mit einer ersten Höhe H auswölbt und die jeweils andere Auswölbung, hier die Auswölbung 312, sich mit einer zweiten Höhe H auswölbt, die geringer ist als die erste Höhe H (hier der Auswölbung 311). Mit anderen Worten hat der Scheitel der Auswölbung 311 zumindest in einem Teilbereich eine andere Höhe H gemessen von der Oberfläche des Ankerkörpers 340 als der Scheitel der Auswölbung 312. Auch hier wird vorteilhaft erreicht, dass zunächst eine kleinere Fläche des jeweiligen Dämpfungskörpers für die Dämpfung wirksam wird, die sich während der Aufschlagbewegung in mehreren Richtungen vergrößert, nämlich einmal ausgehend von der ersten Auswölbung zur zweiten Auswölbung (beispielsweise von außen nach innen) und zum anderen in Normalrichtung des Ankers.

Mit den nebeneinander liegenden Auswölbungen 311, 312 kann beim Zusammendrücken des Dämpfungsmaterials beim Aufschlagen des Ankers 342 am Gegenelement auch vorteilhaft ein Luftaustausch entlang des so gebildeten Kanals zwischen den Auswölbungen 311, 312 erreicht werden. Mit den Auswölbungen findet zudem eine reduzierte Luftverdrängung durch eine kleinere Aufschlagfläche statt. Beides trägt ebenfalls zur Geräuschreduzierung beim Aufschlag des Ankers bei.

Somit dient die Dämpfungseinrichtung 370 als elastisch verformbarer Anschlag für den Plattenanker 342. Dadurch können Schwingungen des Plattenankers sowie störende Geräuschentwicklungen, insbesondere Körperschall, wie sie beispielsweise durch Stöße oder Erschütterungen oder beim schnellen Bewegen des Plattenankers in die Öffnungsposition ausgelöst werden können, unterdrückt oder verhindert werden.

### BEZUGSZEICHENLISTE

- 118: Kippankerventil
- 311, 312: Auswölbung
- 321,322: Vertiefung
- 325: Öffnung
- 326: Schulter
- 348,470: Halbschale
- 330: Spulenelement
- 340: Ankerkörper
- 342: Plattenanker
- 344: Feder
- 350: Spulenkern
- 352: Spule
- 354: Lager
- 356: erste Position
- 358: zweite Position
- 360, 362: Teilbereich der Feder
- 364: Ventilsitz
- 366: Ausgang
- 368: Eingang
- 370: Plattenanker-Dämpfungseinrichtung
- 375: Dichtungskörper
- 376: Haltekörper
- 371, 372: Dämpfungskörper
- 381,382: Erhebung
- 391: Erhebung
- 392: Öffnung
- 472: Anschluss
- 474: Steuersignal
- 476,480: Lagerhalbschale
- 478: Nadelrolle
- 482: Feinsieb
- 486: Lochscheibe
- 590: Magnetfluss
- H: Höhe

## Patentansprüche

1. Plattenanker (342) für ein Kippankerventil (118), aufweisend:
einen Ankerkörper (340), der an einer Stirnseite des Ankerkörpers mittels eines Lagers an dem Kippankerventil (118) lagerbar ist und durch Aktivieren eines elektrischen Spulenelements von einer ersten Position in eine zweite Position bewegbar ist,
eine Plattenanker-Dämpfungseinrichtung (370) aufweisend
wenigstens einen Dämpfungskörper (371, 372), der an dem Plattenanker (342) befestigt ist, mit mindestens einem Dämpfungsmaterial, das bei einer Anschlagbewegung des Plattenankers (342) in Richtung auf ein Gegenelement (486) beim Anschlag an dem Gegenelement elastisch verformbar ist,
wobei die Plattenanker-Dämpfungseinrichtung (370) an einer Oberfläche des Ankerkörpers (340) angebracht ist, so dass der wenigstens eine Dämpfungskörper (371, 372) bei der Anschlagbewegung des Plattenankers (342) von der ersten Position in die zweite Position beim Anschlag an dem Gegenelement (486) elastisch verformt wird,
**dadurch gekennzeichnet, dass** der wenigstens eine Dämpfungskörper (371, 372) eine geometrische Kontur aufweist, die mindestens eine erste Auswölbung (311) und eine zweite Auswölbung (312) aufweist, die an einer dem Gegenelement (486) zugewandten Oberfläche des wenigstens einen Dämpfungskörpers (371, 372) nebeneinander angeordnet sind, jeweils eine gebogene linienartige Erstreckung entlang der Oberfläche des wenigstens einen Dämpfungskörpers (371, 372) aufweisen und die jeweils derart gestaltet sind, dass bei der Anschlagbewegung des Plattenankers (342) das Volumen des wenigstens einen Dämpfungskörpers (371, 372), welches zur Dämpfung beiträgt, zunimmt, wobei während der Anschlagbewegung des Plattenankers (342) zunächst jeweils ein erster Teil des Dämpfungsmaterials an der ersten und zweiten Auswölbung (311, 312) elastisch verformt wird und im weiteren Verlauf der Anschlagbewegung jeweils ein gegenüber dem ersten Teil größerer zweiter Teil des Dämpfungsmaterials elastisch verformt wird.

2. Plattenanker nach Anspruch 1, bei dem die erste und zweite Auswölbung (311, 312) eine kreisrunde Erstreckung entlang der Oberfläche des wenigstens einen Dämpfungskörpers (371, 372) aufweist.

3. Plattenanker nach Anspruch 1 oder 2, bei dem mindestens eine der ersten und zweiten Auswölbung (311, 312) sich in Normalrichtung des Plattenankers (342) mit einer Höhe (H) auswölbt, die sich entlang der linienartigen Erstreckung verändert.

4. Plattenanker nach einem der Ansprüche 1 bis 3, bei dem die erste Auswölbung (311) sich in Normalrichtung des Plattenankers (342) mit einer ersten Höhe (H) auswölbt und die zweite Auswölbung (312) sich in Normalrichtung des Plattenankers (342) mit einer zweiten Höhe (H) auswölbt, die geringer ist als die erste Höhe.

5. Plattenanker nach einem der Ansprüche 1 bis 4, weiterhin aufweisend einen Dichtungskörper (375), der mit dem wenigstens einen Dämpfungskörper (371, 372) verbunden ist, wobei der Dichtungskörper (375) ausgebildet ist, eine Ventilöffnung (364) fluiddicht zu verschließen.

6. Plattenanker nach Anspruch 5, bei dem der Dichtungskörper (375) und der wenigstens eine Dämpfungskörper (371, 372) einstückig ausgebildet sind.

7. Plattenanker nach Anspruch 5 oder 6, mit einem Haltekörper (376), der ausgebildet ist, in dem Plattenanker (342) verankert zu werden, und der wenigstens eine Dämpfungskörper (371, 372) und der Dichtungskörper (375) mit dem Haltekörper (376) verbunden und ausgebildet sind, dass sie bei Befestigung des Haltekörpers (376) im Plattenanker (342) an gegenüberliegenden Oberflächen des Plattenankers (342) anliegen.

8. Plattenanker nach einem der Ansprüche 5 bis 7, wobei der Dichtungskörper (375) und der wenigstens eine Dämpfungskörper (371, 372) in Normalrichtung des Plattenankers (342) gesehen zueinander versetzt angeordnet sind.

9. Plattenanker nach einem der Ansprüche 5 bis 8, bei dem der wenigstens eine Dämpfungskörper (371, 372) einen ersten Dämpfungskörper (371) und einen zweiten Dämpfungskörper (372) aufweist, die in Normalrichtung des Plattenankers (342) gesehen jeweils versetzt zum Dichtungskörper (375) angeordnet sind.

10. Plattenanker nach Anspruch 9, bei dem der erste Dämpfungskörper (371) und der zweite Dämpfungskörper (372) versetzt an gegenüberliegenden Seiten des Dichtungskörpers (375) angeordnet sind.

11. Plattenanker nach einem der Ansprüche 1 bis 10, bei dem der Ankerkörper (340) wenigstens eine erste Vertiefung (321, 322) aufweist, in welcher der wenigstens eine Dämpfungskörper (371, 372) wenigstens entlang einer Teilerstreckung des Dämpfungskörpers (371, 372) angebracht ist.

12. Plattenanker nach Anspruch 11, bei dem der Ankerkörper (340) eine zweite Vertiefung oder Öffnung (325) aufweist, an der ein oder der Dichtungskörper (375) an einer dem wenigstens einen Dämpfungskörper (371, 372) gegenüberliegenden Oberfläche des Ankerkörpers (340) angeordnet und ausgebildet ist, eine Ventilöffnung (364) des Kippankerventils (118) im Gebrauch fluiddicht zu verschließen, wobei die wenigstens eine erste Vertiefung (321, 322) und die zweite Vertiefung oder Öffnung (325) in Normalrichtung des Ankerkörpers (340) zueinander versetzt sind.

13. Kippankerventil (118) mit einem Plattenanker (342) nach einem der Ansprüche 1 bis 12.

14. Kippankerventil nach Anspruch 13, wobei das Kippankerventil (118) als Kippankerventil für ein Druckregelmodul eines Fahrzeugs ausgebildet ist.

## Claims

1. Plate armature (342) for a tilting armature valve (118), having:
an armature body (340), which can be mounted at the tilting armature valve (118) by means of a bearing at an end face of the armature body and is movable from a first position into a second position by activation of an electric coil element,
a plate armature damping device (370) having
at least one damping body (371, 372), which is fixed to the plate armature (342), with at least one damping material which, on an impact movement of the plate armature (342) in the direction of a counter-element (486), is elastically deformable on impact on the counter-element,
wherein the plate armature damping device (370) is mounted on a surface of the armature body (340), so that the at least one damping body (371, 372), on the impact movement of the plate armature (342), is elastically deformed from the first position into the second position on impact on the counter-element,
**characterised in that** the at least one damping body (371, 372) has a geometric contour comprising at least one first bulge (311) and one second bulge (312) arranged adjacent to each other on a surface - facing the counter-element (486) - of the at least one damping body (371, 372), each of them having a curved linear extent along the surface of the at least one damping body (371, 372) and being designed such that, on the impact movement of the plate armature (342), the volume of the at least one damping body (371, 372) increases, wherein, during the impact movement of the plate armature (342), initially a first part of the damping material is elastically deformed at the first and the second bulge (311, 312) and, in the further course of the impact movement, a second part of the damping material, which is larger than the first part, is elastically deformed.

2. Plate anchor according to claim 1, in which the first and the second bulge (311, 312) have a circular extent along the surface of the at least one damping body (371, 372).

3. Plate anchor according to claim 1 or 2, in which at least one of the first and second bulges (311, 312) protrudes in the normal direction of the plate armature (342) with a height (H) which changes along the linear extent.

4. Plate armature according to any of claims 1 to 3, in which the first bulge (311) protrudes in the normal direction of the plate armature (342) with a first height (H) and the second bulge (312) protrudes in the normal direction of the plate armature (342) with a second height (H) which is smaller than the first height.

5. Plate armature according to any of claims 1 to 4, further having a sealing body (375), which is connected to the at least one damping body (371, 372), wherein the sealing body (375) is configured to close a valve opening (364) fluid-tightly.

6. Plate armature according to claim 5, in which the sealing body (375) and the at least one damping body (371, 372) are designed integrally.

7. Plate armature according to claim 5 or 6, having a retaining body (376) which is configured to be anchored in the plate armature (342), and the at least one damping body (371, 372) and the sealing body (375) are connected to the retaining body (376) and configured such that they lie on opposite faces of the plate armature (342) on fixing of the retaining body (376) in the plate armature (342).

8. Plate armature according to any of claims 5 to 7, wherein the sealing body (375) and the at least one damping body (371, 372) are arranged offset to one another, viewed in the normal direction of the plate armature (342).

9. Plate armature according to any of claims 5 to 8, in which the at least one damping body (371, 372) has a first damping body (371) and a second damping body (372) which are each arranged offset to the sealing body (375), viewed in the normal direction of the plate armature (342).

10. Plate armature according to claim 9, in which the first damping body (371) and the second damping body (372) are arranged offset on opposite sides of the sealing body (375).

11. Plate armature according to any of claims 1 to 10, in which the armature body (340) has at least one first recess (321, 322) in which the at least one damping body (371, 372) is arranged at least along a partial extent of the damping body (371, 372).

12. Plate armature according to claim 11, in which the armature body (340) has a second recess or opening (325), at which an or the sealing body (375) is arranged on the surface of the armature body (340) opposite the at least one damping body (371, 372) and is configured to close a valve opening (364) of the tilting armature valve (118) fluid-tightly in use, wherein the at least one first recess (321, 322) and the second recess or opening (325) are offset to one another in the normal direction of the armature body (340).

13. Tilting armature valve (118) having a plate armature (342) according to any of claims 13 to 12.

14. Tilting armature valve according to claim 13, wherein the tilting armature valve (118) is configured as a tilting armature valve for a pressure control module of a vehicle.

## Revendications

1. Armature (342) à plaque pour une soupape (118) à armature basculante, comportant :
un corps (340) d'armature, qui peut, sur un côté frontal du corps d'armature, être monté sur une soupape (118) à armature basculante au moyen d'un palier et qui peut, par activation d'un élément électrique de bobine, passer d'une première position à une deuxième position,
un dispositif (370) d'amortissement d'armature à plaque, comportant
au moins un corps (371, 372) d'amortissement, qui est fixé à l'armature (342) à plaque, ayant au moins un matériau d'amortissement, qui, lors d'un déplacement de butée de l'armature (342) à plaque en direction d'un élément (486) antagoniste, peut être déformé élastiquement par butée sur l'élément antagoniste,
dans lequel le dispositif (370) d'amortissement d'armature à plaque est monté sur une surface du corps (340) d'armature, de manière à ce que le au moins un corps (371, 372) d'amortissement se déforme élastiquement à la butée sur l'élément (486) antagoniste, lors du mouvement de butée de l'armature (342) à plaque de la première position à la deuxième position,
**caractérisée en ce que** le au moins un corps (371, 372) d'amortissement a un contour géométrique, qui a au moins un premier bombement (311) et un deuxième bombement (312), qui sont disposés l'un à côté de l'autre sur une surface, tournée vers l'élément (486) antagoniste, du au moins un corps (371, 372) d'amortissement, ont respectivement une étendue incurvée de type linéaire, le long de la surface du au moins un corps (371, 372) d'amortissement, et sont conformés chacun de manière à ce que, lors du mouvement de butée de l'armature (342) à plaque, le volume du au moins un corps (371, 372) d'amortissement, qui contribue à l'amortissement, augmente, dans lequel, pendant le mouvement de butée de l'armature (342) à plaque, d'abord respectivement une première partie du matériau d'amortissement est déformée élastiquement sur le premier et le deuxième bombements (311, 312) et, lorsque le mouvement de butée se poursuit, respectivement une deuxième partie, plus grande que la première partie, du matériau d'amortissement se déforme élastiquement.

2. Armature à plaque suivant la revendication 1, dans laquelle le premier et le deuxième bombements (311, 312) ont une étendue circulaire le long de la surface du au moins un corps (371, 372) d'amortissement.

3. Armature à plaque suivant la revendication 1 ou 2, dans laquelle au moins l'un du premier et du deuxième bombements (311, 312) se bombe dans la direction normale de l'armature (342) à plaque sur une hauteur (H), qui se modifie le long de l'étendue de type linéaire.

4. Armature à plaque suivant l'une des revendications 1 à 3, dans laquelle le premier bombement (311) se bombe dans la direction normale de l'armature (342) à plaque avec une première hauteur (H) et le deuxième bombement (312) se bombe dans la direction normale de l'armature (342) à plaque avec une deuxième hauteur (H), qui est plus petite que la première hauteur.

5. Armature à plaque suivant l'une des revendications 1 à 4, comportant en outre un corps (375) d'étanchéité, qui est relié au au moins un corps (371, 372) d'amortissement, dans lequel le corps (375) d'étanchéité est constitué pour fermer une ouverture (364) de soupape d'une manière étanche au fluide.

6. Armature à plaque suivant la revendication 5, dans laquelle le corps (375) d'étanchéité et le au moins un corps (371, 372) d'amortissement sont constitués d'une seule pièce.

7. Armature à plaque suivant la revendication 5 ou 6, comprenant un corps (376) de maintien, qui est constitué pour être ancré dans l'armature (342) à plaque et le au moins un corps (371, 372) d'amortissement, et le corps (375) d'étanchéité sont reliés au corps (376) de maintien et sont constitués de manière à ce qu'ils s'appliquent, lors de la fixation du corps (376) de maintien, dans l'armature (342) à plaque sur des surfaces opposées de l'armature (342) à plaque.

8. Armature à plaque suivant la revendication 5 à 7, dans laquelle le corps (375) d'étanchéité et le au moins un corps (371, 372) d'amortissement sont disposés de manière décalée l'un par rapport à l'autre, considéré dans la direction normale de l'armature (342) à plaque.

9. Armature à plaque suivant l'une des revendications 5 à 8, dans laquelle le au moins un corps (371, 372) d'amortissement a un premier corps (371) d'amortissement et un deuxième corps (372) d'amortissement, qui sont disposés en étant décalés par rapport au corps (375) d'étanchéité respectivement, considérés dans la direction normale à l'armature (342) à plaque.

10. Armature à plaque suivant la revendication 9, dans laquelle le premier corps (371) d'amortissement et le deuxième corps (372) d'amortissement sont disposés en étant décalés sur des côtés opposés du corps (375) d'étanchéité.

11. Armature à plaque suivant l'une des revendications 1 à 10, dans laquelle le corps (340) de l'armature a au moins un premier creux (321, 322), dans lequel le au moins un corps (371, 372) d'amortissement est mis au moins le long d'une étendue partielle du corps (371, 372) d'amortissement.

12. Armature à plaque suivant la revendication 11, dans laquelle le corps (340) de l'armature a un deuxième creux ou une ouverture (325), sur laquelle un ou le corps (375) d'étanchéité est disposé sur une surface, opposée au au moins un corps (371, 372) d'amortissement, du corps (340) de l'armature, et est constitué pour fermer d'une manière étanche au fluide en utilisation une ouverture (364) de la soupape (118) à armature basculante, dans laquelle le au moins un premier creux (321, 322) et le deuxième creux ou l'ouverture (325) sont décalés l'un par rapport à l'autre dans la direction normale au corps (340) de l'armature.

13. Soupape (118) à armature basculante ayant une armature (342) à plaque suivant l'une des revendications 1 à 12.

14. Soupape à armature basculante suivant la revendication 13, dans laquelle la soupape (118) à armature basculante est constituée sous la forme d'une soupape à armature basculante pour un module de réglage de la pression d'un véhicule.
